# EUROPÄISCHE PATENTSCHRIFT

(11) **EP 3 276 163 B1**
(45) Veröffentlichungstag und Bekanntmachung des Hinweises auf die Patenterteilung: **13.07.2022**
(21) Anmeldenummer: 17183532.5
(22) Anmeldetag: 27.07.2017
(51) Int. Cl.: F03D 5/02, F03D 9/25

(54) **VORRICHTUNG ZUR STROMERZEUGUNG MITTELS EINES HÖHENWINDRADES**
DEVICE FOR GENERATING ELECTRIC POWER USING A HIGH WIND TURBINE
DISPOSITIF DE PRODUCTION D'ÉNERGIE ÉLECTRIQUE AU MOYEN D'UNE ROUE ÉOLIENNE HAUTE ALTITUDE

(30) Priorität: 28.07.2016 DE 102016113993
(43) Veröffentlichungstag der Anmeldung: 31.01.2018
(73) Patentinhaber: Miller, Bernhard, 71263 Weil der Stadt (DE)
(72) Erfinder: Miller, Bernhard, 71263 Weil der Stadt (DE)
(74) Vertreter: Patentanwälte und Rechtsanwalt Weiß, Arat & Partner mbB

(56) Entgegenhaltungen:
- WO-A1-2010/141753
- WO-A1-2013/151678
- FR-A1- 2 667 904
- US-A1- 2010 230 968
- US-A1- 2015 275 861
- US-B1- 7 188 808

## Beschreibung

Die Erfindung betrifft eine Vorrichtung nach dem Oberbegriff des Anspruchs 1.

Der weitere Ausbau der Windkraft stößt wegen seiner Landschaftsbeeinträchtigung zunehmend auf Widerstand und Ablehnung. Die Erstellungs- und Betriebskosten sind wegen der aufwendigen Bauweise zu hoch um einen wirtschaftlich Betrieb zu ermöglichen. In diesem Zusammenhang wird auf die WO 2010/141753 A1 hingewiesen, welche eine Windkraftvorrichtung beschreibt, welche einen durch Windkraft aufsteigenden Rotor aufweist und beim Aufsteigen über ein Seil einen Generator antreibt. Weiter wird auf die US 2010/0230968 A1 verwiesen, welche ebenfalls eine Rotorvorrichtung offenbart, welche über ein Seil mit einem Generator verbunden ist. Ausserdem wird auf die US 2015/0275861 A1 hingewiesen, welche einen Rotor offenbart, der mit einer zusätzlichen Flugeinrichtung versehen ist, um den Rotor in einer bestimmten Höhe zu halten, wobei die Energie, die der Rotor aufnimmt über ein Expansionsseil auf einen Generator übertragen wird. Daneben wird auf die FR 2 667 904 A1 hingewiesen. Dort ist eine Doppelrotorvorrichtung offenbart, welche über ein kompliziertes Seilsystem mit einem Generator verbunden ist. Zuletzt wird auf die WO 2013/151678 A1 hingewiesen, welche ein Rotorfluggerät offenbart, welches durch Windkraft angetrieben wird und die aufgenommene Energie an eine am Boden befindliche Generatoreinheit überträgt.

Die US 7,188,808 B1 beschreibt ein System zur Stromerzeugung aus der Luft mittels eines rotierenden Apparats umfasst Führungsleinen, die von einem Stützkörper getragen werden, die dem System zusätzliche Stabilität und Kontrolle über Winkelausrichtung und Bewegungsrichtung verleiht.

Auch sind Offshoreanlagen nicht weiter ausbaufähig, da diese bislang nur bis 30 m Wassertiefe wirtschaftlich realisierbar sind und weltweit gesehen nur wenige Küstenbereiche hierfür nutzbar sind. Normale Windräder, wie sie z.B. als Kleinanlagen zur Stromerzeugung für einzelne Gebäude bekannt sind, können mit typisch einigen hundert Watt erzeugter Windleistung bestenfalls einen ergänzenden Beitrag zur Gesamtversorgung eines Gebäudes liefern. Des Weiteren ist die Wahl des Standortes konventioneller Windkraftanlagen eingeschränkt.

Soll gar eine Windkraftanlage zur Energieerzeugung an einem bestehenden Gebäude installiert werden, so ist häufig infolge des schlechten Standorts kein wirtschaftlicher Betrieb möglich. Daher sind Kleinwindkrafträder zur Stromeinspeisung an einzelnen Gebäuden bislang relativ selten zu finden. Da Fotovoltaik Anlagen wiederum einen großen Flächenbedarf auf dem Gebäudedach benötigen, ist es häufig nicht möglich den tatsächlichen Energiebedarf eines Gebäudes komplett mit alternativ erzeugter Energie zu versorgen.

### Aufgabe der Erfindung

Aufgabe der Erfindung ist es die beschriebenen Nachteile des Standes der Technik abzustellen.

### Lösung der Aufgabe

Zur Lösung der Aufgabe führen die Merkmale nach dem Anspruch 1. Vorteilhafte Ausgestaltungen sind in den Unteransprüchen beschrieben.

Die in größeren Höhen vorherrschenden Winde sind stärker und stetiger als in Bodennähe und die damit nutzbare Energie ist gar um ein vielfaches höher als in Bodennähe.

Die anbei beschriebene Anlage schafft daher eine Möglichkeit, unabhängig vom Standort und auch unter engen räumlichen Verhältnissen einzelne Gebäude ausreichend mit alternativ erzeugter Windenergie zu versorgen.

Hierzu wird ein Windrad an einem Zugseil gehalten. Dieses Windrad nutzt dabei den weit energiereicheren Höhenwind in einer Höhe von 200 bis 500 m über Grund. Normale Windräder, wie sie z.B. als Kleinanlagen zur Stromerzeugung für einzelne Gebäude bekannt sind, können mit typisch einigen hundert Watt erzeugter Windleistung bestenfalls einen ergänzenden Beitrag zur Gesamtversorgung eines Gebäudes liefern. Im Vergleich zu Fotovoltaikanlagen ist auch die Verfügbarkeit insbesondere von Höhenwindnutzung deutlich höher, da die Windkraft durchgehend auch nachts zur Verfügung steht.

Wie bereits bei mehreren bekannten Flugwindkraftanlagen wird auch bei dieser Höhenwindkraftanlage Energie durch zyklisches Fieren und Einziehen von durch den Wind gleitenden Flügeln (Jo-Jo) erzeugt.

An Stelle einzelner Flügel, wie sie in mehreren bekannten Konzepten verwendet werden, wird bei dem anbei beschriebenen Konzept ein Flügelrad vom Wind angeströmt und dadurch in Rotation versetzt. Dieses Flügelrad ist über ein Zugseil mit einer Bodenstation verbunden. An der Bodenstation wird dieses schräg nach oben verlaufende Seil über eine drehbare Umlenkrolle in eine senkrechte Seilführung umgelenkt und am Ende von einer drehfest platzierten Seiltrommel aufgenommen.

Direkt unterhalb der Umlenkrolle wird das Zugseil durch ein senkrecht angeordnetes rundes Rohrstück geführt. Dieses Rohrstück dient während der Landung der Aufnahme des Flügelrades. Damit kann im Falle eines Sturmes das Flügelrad vollautomatisch eingeholt und sturmfest gehalten werden.

Während des Betriebs zur Stromerzeugung bewirkt das Rotieren des Flügelrads während der Steigphase eine Steigerung der Zugkraft gleich dem bekannten Effekt des schnellen Schirmgleitens beim Kitesurfen. Das Flügelrad wird vom Wind mitgetragen, wobei das Zugseil aus der Seiltrommel gezogen wird. Dieses Abwickeln des Seils unter Zug treibt einen mit der Seiltrommel drehbar verbundenen Generator an, wodurch Strom zur Eigenversorgung eines Gebäudes oder zur Einspeisung ins öffentliche Stromnetz erzeugt wird.

Nach Erreichen der gewünschten Maximalhöhe wird der Anstellwinkel der Flügel so verändert, dass das Flügelrad im schnellen Sinkflug an seine Ausgangshöhe zurückgeführt wird. Durch zurückstellen des Anstellwinkels vergrößert sich wieder die Zugkraft und das Flügelrad beginnt erneut unter hoher Zugkraft anzusteigen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen im Einzelnen Folgendes:
Figur 1 zeigt eine schnittartige seitliche Darstellung eines einzelnen Flügelrads zur Stromerzeugung
Figur 2 zeigt in einer seitlichen Darstellung die Gesamte Anlage bestehend aus einer Bodenstation sowie einem mit einem Zugseil mit der Bodenstation verbundenen Flügelrad
Figur 3 zeigt wie Figur 1 ein einzelnes Flügelrad mit einer durch das Zugseil geführten Starthilfevorrichtung bestehend aus zwei mittels Akkus betriebenen Propellern
Figur 4 zeigt in einer seitlichen Darstellung die an der Bodenstation befindliche Halterung zur Aufnahmen des Flügelrads während der Landung
Figur 5 zeigt wie bereits in Figur 4 gezeigt eine Halterung nach erfolgter Landung mit darin aufgenommenem Flügelrad
Figur 6 zeigt die wie in Figur 4 gezeigte Halterung in einer Draufsicht
Figur 7 zeigt in einer seitlichen Schnittdarstellung die Funktion der Flügelsteuerung bestehend aus einer Taumelscheibe
Figur 8 zeigt wie in Figur 7 in einer Draufsicht die Funktion der Flügelsteuerung mit einer Taumelscheibe
Figur 9 zeigt die Anbindung des Motor/Generators bezüglich Seitenflosse, und Abkopplung des Propellers durch jeweils einen Freilauf
Figur 10 zeigt in einer Draufsicht eine weitere Ausgestaltung eines Flügelrads zur Stromerzeugung
Figur 11 zeigt wie in Figur 10 ein solches Flügelrad zur Stromerzeugung, dessen einzelne Flügel jedoch nur noch mittels Seilen miteinander verbunden sind
Figur 12 zeigt wie in Figur 11 ein Flügelrad in einer seitlichen Schnittdarstellung
Figur 13 zeigt wie in Figur 10 ein Flügelrad in einer seitlichen Schnittdarstellung
Figur 14 zeigt einen Flügel 63 in einer stirnseitigen Schnittdarstellung
Figur 15 zeigt in einer Draufsicht die Schnittdarstellung eines Flügels 63
Figur 16 zeigt in einer Detailansicht ein Flügelrad in Draufsicht wie bereits in Figur 10
Figur 17 zeigt in einer seitlichen Schnittdarstellung das innere Flügelende mit gesplitteten Winglets

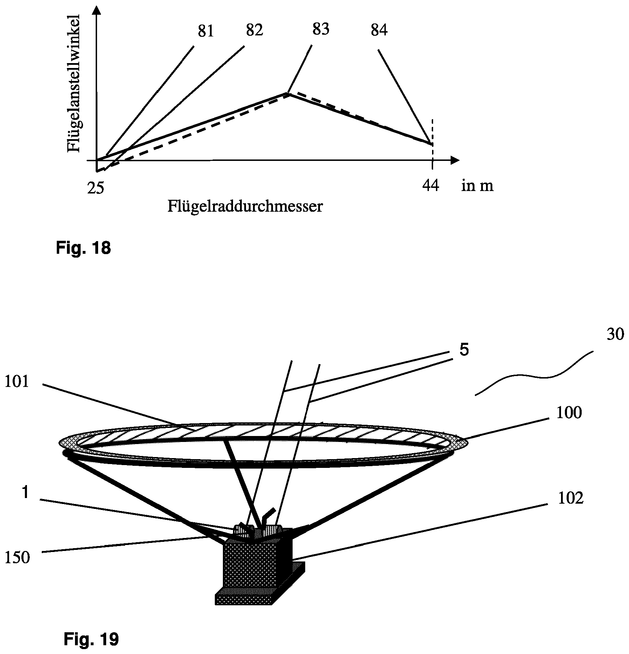

Figur 18 zeigt anhand eines Diagramms die mit einer Änderung des Flügelraddurchmessers einhergehende Änderung des Flügelanstellwinkels

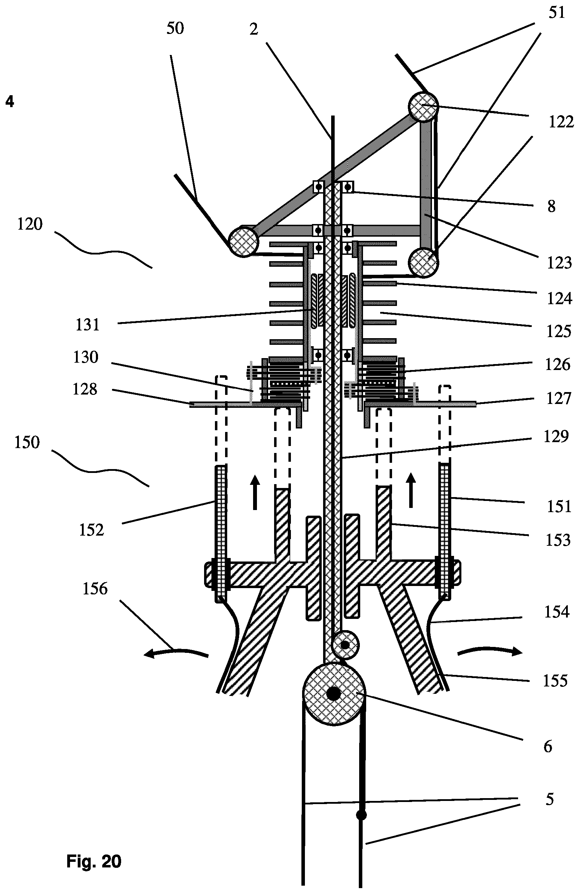

Figur 19 zeigt in einer seitlichen Darstellung weitere Start- und Landevorrichtung für ein Flügelrad wie in Figuren 10 bis 17 dargestellt Figur 20 zeigt einen Flügelradhalter in einer seitlichen Schnittdarstellung
Figur 21 zeigt in Seitenansicht ein Flügelrad mit einem Querverbindungsseil zu einem benachbarten Flügelrad sowie einem Positionierseil
Figur 22 zeigt in Seitenansicht ein Flügelrad mit einem Querverbindungsseil zu einem benachbarten Flügelrad sowie einem Positionierseil

### Start und Landung

Die Lagesteuerung des Flügelrades erfolgt ähnlich wie bei Hubschraubern durch eine Einzelblattverstellung der einzelnen Flügel des Flügelrads, wobei ein im Flügelrad platzierter Dreiachsenwinkelsensor die winkelbezogene Ausrichtung und damit die Position des Flügelrades erfasst. Der Motor dient während des Flugbetriebs als Generator zur Stromversorgung der SteuerElektronik bzw. zur Positionierung, wobei eine Seitenflosse das Gegendrehmoment für den Generator herstellt.

Das Starten des Flügelrads ist auch bei Windstille in Bodennähe möglich. Hierzu ist im Flügel selbst integriert oder unterhalb des Flügelrads ein Propeller 24 angebracht, welcher von einem Elektromotor angetrieben wird.

Ein in einem Verbindungsrohr 23 platzierter Motor mit Akkuversorgung treibt den Propeller an. Während des Aufsteigens erzeugt der sich drehende Propeller ein rückwärtsgerichtetes Drehmoment, wodurch sich das Flügelrad 63 in entgegen gesetzter Richtung dreht.

Eine Seitenflosse 55 ist drehfest angeordnet und liefert der Steuereinheit sowie einer Taumelscheibe die nötigen drehbezogenen Bezugspunkte zur Stabilisierung und Steuerung des Flügelrads.

Dieser Elektromotor wird aus einem Akku oder über ein elektrisches Kabel vom Boden aus versorgt. Während des Normalbetriebs (der Stromerzeugung) wird dieser Propeller nicht benötigt, so dass die Stromzuführung nur während des Starts bis zu einer Höhe von 50 bis 100 m mitgeführt wird.

Während der ersten Phase des Anstiegs ist der Flugverlauf senkrecht und geht langsam in eine schräge Laufbahn entsprechend der Windrichtung über.

Während der Landung geht die schräge windrichtungsabhängige Position ähnlich wie während dem Starten langsam in eine senkrechte Flugbahn über. Schließlich wird das untere rohrartige Ende 27 des Flügelrads von einem drehbaren Halter 28 aufgenommen.

### Stabilisierung und Steuerung des Flügelrads

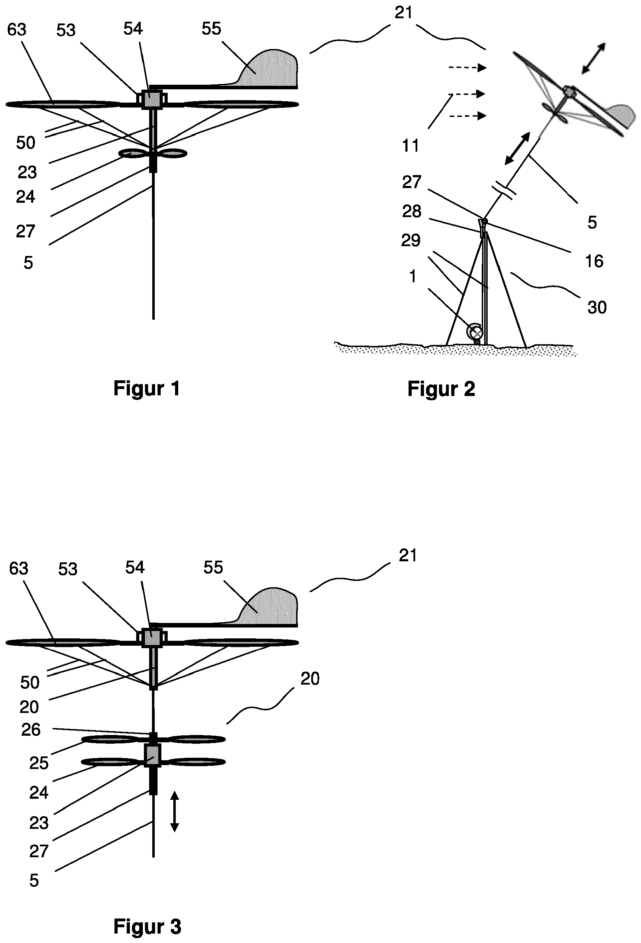

Zur genauen Positionierung des Flügelrads während des Betriebs besitzt das Flügelrad ähnlich wie bei Hubschraubern eine Einzelblattverstellung. Während der gesamten Betriebsdauer steuert die von drei bzw. 6 Servomotoren angesteuerte Taumelscheibe über die Anstellwinkel damit die Flugrichtung des Flügelrads. Da das Flügelrad keinen Heckrotor (wie bei Hubschraubern) besitzt, ist bei der in Figur 1 gezeigten Flügelradeinheit oberhalb des Flügelrads eine Seitenflosse 55 angebracht. Damit verfügt das sich ansonsten rotierende Flügelrad über eine horizontal drehfeste Einrichtung.

Die Seitenflosse 55 steuert eine Taumelscheibe, so dass eine Einzelblattverstellung ermöglicht wird. Gleichzeitig erzeugt die Seitenflosse ein Gegenhaltemoment für den Betrieb eines Generators zur Deckung des Energiebedarfs der Steuerung sowie zum Aufladen der Akkus.

Ein im Flügelrad platzierter Dreiachsenwinkelsensor erfasst die winkelbezogene vertikale und horizontale Ausrichtung der Flügelradeinheit und damit die Position des Flügelrades. Diese winkelbezogenen Informationen werden per Funk an die Seilwinde am Boden gesendet.

Die nach jeder Landung des Flügelrads gemessene Position der Bodenstation kann zusammen mit der an der Seilwinde gemessenen aktuellen Seillänge und der Winkel- und Lageposition des Flügelrads in der Luft eine exakte aktuelle Position der Flügelradeinheit ermittelt werden. Dabei ist die vertikale Winkelposition identisch mit dem Winkel des Zugseils.

Per WLAN können diese Daten ausgesendet und ggf. von in räumlicher Nähe befindlichen weiteren gleichartigen Windkraftanlagen empfangen werden. Somit kann ein für den sicheren Betrieb notwendiger Mindestabstand zwischen den einzelnen Anlagen sichergestellt werden.

Besonderheiten:
- Eine Seilwinde 1 ist horizontal drehfest angeordnet
- Eine Haltevorrichtung 28 dient der Aufnahme und sicheren Fixierung der Flügelradeinheit in Parkposition z.B. während eines Sturms
- Der Anstellwinkel jedes einzelnen Flügels kann über eine Taumelscheibe einzeln verstellt werden
- Der Elektromotor 23 ist mit dem Flügelrad 63 drehfest verbunden, während die Antriebswelle des Motors 96 drehfest mit einem Propeller 24 verbunden ist.
- Der Elektromotor 23 wird von einem aus Akkus gespeist und treibt einen Propeller in der Steigphase um das Flügelrad bis zu einer Höhe mit ausreichendem Wind bzw. zur gewünschten Arbeitshöhe zu gelangen
- Die Seitenflosse 55 ist über einen Freilauf 35 mit der Achse 96 des Propellers 63 verbunden
- Während der Startphase und dem Rotieren des Propellers ist die Seitenflosse mit Hilfe des Freilaufs 35 von der Drehbewegung des Motors bzw. Propellers entkoppelt
- Im Normalbetrieb zur Stromerzeugung wird der nicht benötigte Elektromotor als Generator verwendet und lädt den Akku bzw. versorgt die Steuerelektronik und die Servomotoren zur Taumelscheiben- und damit Rotorblattansteuerung
- Die Seitenflosse 55 ermöglicht ein Gegenhaltemoment für den Generator, wobei der Freilauf 35 in dieser Arbeitsphase eine Kopplung der Seitenflosse mit der Motorantriebswelle herstellt
- Flügelradhalteseile 50 ermöglichen einen Flügelradaufbau in Leichtbauweise
- Ein im Flügelrad platzierter Dreiachsenwinkelsensor erfasst die winkelbezogene Ausrichtung und damit die Position des Flügelrades.
- Die gespeicherten Informationen zur genauen Position des Breiten- und Längengrads werden zusammen mit Seilwinkel und -länge an die Seilwinde am Boden bzw. benachbarte gleichartige Anlagen per Funk gesendet, so dass die Position des Flügelrads genau bekannt ist. Dadurch kann genügend Sicherheitsabstand zu benachbarten gleichartigen Windrädern gewährleistet werden kann.
- Eine Taumelscheibe 90, 91 ermöglicht eine Stabilisierung und Steuerung des Flügelrades 63 zur präzisen Positionierung bzw. abfliegen einer Sollflugbahn
- Die Taumelscheibe wird einerseits mit Hilfe von 3 Drehlagern 93 und deren Gestänge 94 sowie einer Seitenflosse 55 angesteuert
- Die Bodenstation 30 ist über eine Funkverbindung einerseits mit dem Flügelrad als auch z.B. mittels WLAN mit dem Internet verbunden. Auf diese Weise erhält die Windkraftanlage Informationen hinsichtlich einem sich nähernden Gewitter oder heftigem Sturm. Daraufhin kehrt die Flügelradeinheit 21 automatisch zur Bodenstation 30 zurück und kann somit vor eventueller Beschädigung geschützt werden.
- Eventuell auftretende Störungen und Fehlermeldungen können vom Flügelrad an die Bodenstation und von dort ggf. per WLAN direkt zu einer Servicefirma gesendet werden, so dass Ausfallzeiten minimiert werden können
- Während der Start- bzw. Landephase kann die Flugbahn das Flügelrades senkrecht erfolgen mittels rechnergesteuerter Einzel-Flügelblattverstellung
- Zu Servicezwecken kann das Flügelrad während der Landung z.B. manuell gesteuert, anstelle zur Start-/Landevorrichtung auch direkt am Boden landen
- Ebenfalls wird der Status des Fierens gesendet so dass benachbarte Windräder antizyklisch arbeiten können. Damit können bei gleichzeitiger Einspeisung mehrerer gleichartiger Anlagen Einspeiselücken vermieden bzw. minimiert werden

### Bodenstation mit drehbarer Seilumlenkrolle

Die Bodenstation besteht aus einer ortsfest platzierten Seilwinde 1, deren Seil wie in Figur 2 gezeigt, senkrecht nach oben zu einer horizontal drehbaren Umlenkrolle 16 geführt wird.

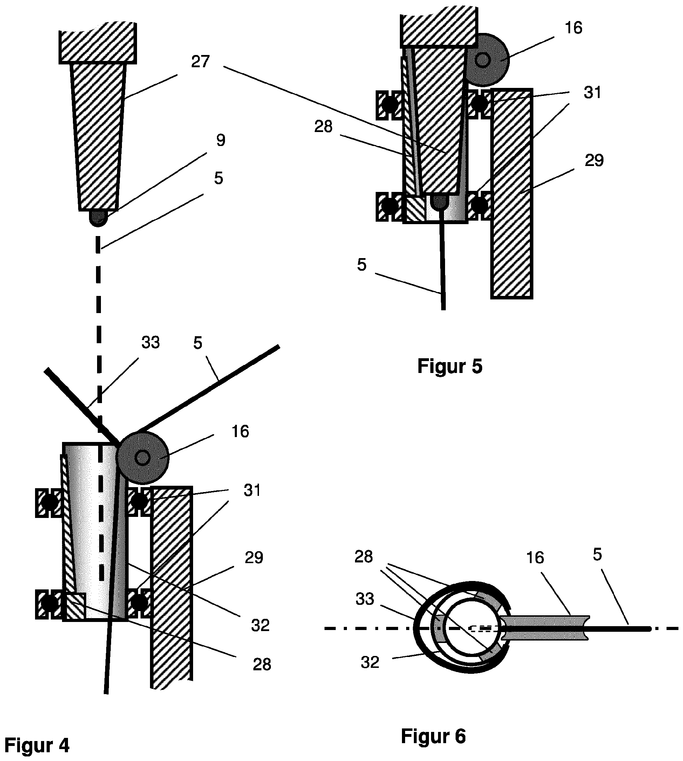

Wie in den Figuren 4 bis 6 gezeigt, wird diese Umlenkrolle 16 entsprechend der Windrichtung über eine drehbare Hülse 32 mittels zwei horizontal drehbaren Lagern 31 nachgeführt. Dabei wird das Zugseil 5 durch die Hülse 32 durchgeführt.

Während der Landung taucht wie in Figur 4 gezeigt, das untere konische Ende des Flügelrades 27 in eine ebenfalls konische dreiteilige Hülse 28 ein. Dadurch kann das Flügelrad sturmsicher von der Bodenstation gehalten werden.

Während des Startvorgangs beginnt der Propeller sich zu drehen und hebt das Flügelrad wieder aus seiner Halterung 28. Mit Erreichen der Arbeitshöhe wird der Propeller 24 abgeschaltet und das Flügelrad nimmt windrichtungsabhängig eine schräge Position ein.

Ein Seilführungsbügel 33 sorgt dafür, dass das Zugseil 5 nachdem Start die Umlenkrolle horizontal so verdreht, dass das Zugseil 5 über die Rolle verläuft und davon umgelenkt wird.

Die Start- und Landevorrichtung 30 kann an verschiedenen Orten platziert werden. So kann der Haltemast 29 in Firstnähe auf einem Hausdach platziert werden. Die Seilwinde selbst kann dabei am Boden platziert werden.

Im Freien Gelände installiert kann wie in Figur 2 gezeigt, ein mit Abspannseilen stabilisierter Haltemast 29 das Flügelrad aufnehmen.

### Steuerung der Flügelanstellwinkel mittels Taumelscheibe

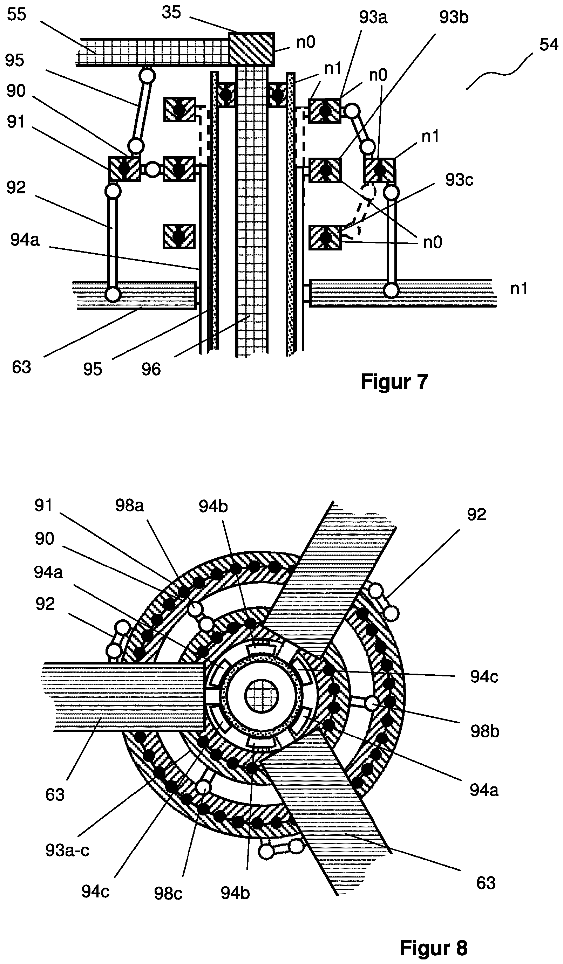

Die Steuerung zur Positionierung des Höhenwindrads erfolgt ähnlich wie bei der Rotorblattsteuerung eines Hubschraubers mit Hilfe einer Taumelscheibe. Entgegen der Steuerung der Rotorblätter eines Hubschraubers ist hierbei jedoch die Anordnung (Flügelrad, Rumpf) quasi auf den Kopf gestellt. Wie in Figur 7 dargestellt, bildet das Flügelrad 63 den rotierenden Teil (mit Drehzahl n1 bezeichnet), in welchem auch der Antrieb (Motor, Akku) untergebracht ist, während der rotationsfeste Teil (Hier mit n0 bezeichnet) von einer durch den Wind "festgehaltenen" Seitenflosse 55 besteht. Diese Seitenflosse 55 befindet sich auf der Oberseite des Flügelradeinheit. Die Taumelscheibe 90,91 wird auf ihrem Innenkranz 90 über eine Fixierstange 95 von der Seitenflosse 55 drehfest n0 gehalten. Die Ansteuerung der Taumelscheibe erfolgt aus dem rotierenden Flügelrad heraus. Da die Ansteuerung sich im rotierenden Teil des Flügelrads befindet, werden weitere 3 Drehlager 93 benötigt, um die notwendigen Steuerbefehle auf die Taumelscheibe 90 zu übertragen. Jedes dieser Drei Drehlager ist an einer Stelle 98 seiner Außenseite mit der Taumelscheibe 90 verbunden. Diese drei Verbindungspunkte 98 sind an der Taumelscheibe umlaufend jeweils um 120° versetzt angeordnet. Mittels 3 Gestängen 94 übertragen Servomotoren die Steuerbefehle auf die drei Drehlager 93.

Die Ansteuerung zum Verstellen der Gestänge 94 zu den Drehlagern 93 kann durch Servomotoren erfolgen. Zu Erhöhung der Zuverlässigkeit und Verstellkraft können je zwei einzelne Servoantriebe verwendet werden. Dabei werden die beiden Servoantriebe mit den beiden Enden eines Hebels verbunden. Die Mitte dieses Hebels ist mit dem Gestänge 94 verbunden. Damit entsteht die Möglichkeit, dass bei einem Ausfall eines der beiden Servoantriebe mit dem zweiten Antrieb die Steuerung weiterhin gewährleistet werden kann. Außerdem verdoppelt sich die Ansteuerkraft (bei Weghalbierung) der Servoantriebe.

### Kopplung von Motor/Generator mit Seitenflosse und Propeller

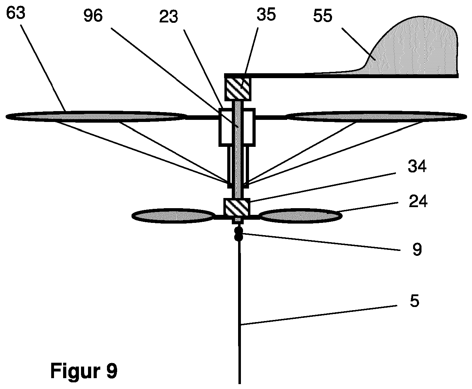

Während des Startens treibt der Motor wie in Figur 9 gezeigt, über eine durchgehende Antriebswelle 96 den Propeller 24 an. Die Drehrichtung des Motors ist z.B. im Uhrzeigersinn, während der Propeller sich entgegen gesetzt dreht. Eine zwischen Antriebswelle 96 und dem Propeller 24 zwischen geschalteter Freilauf 34 überträgt dabei die Drehbewegung an den Propeller.

Nach Erreichen der Sollhöhe schaltet sich der Motor ab. Der Freilauf 34 entkoppelt den Motor vom Propeller, da sich die Laufrichtung der Antriebswelle umkehrt.

Der Freilauf 35 überträgt nun die Drehposition über die Antriebswelle 96 von der Seitenflosse an den Motor. Dadurch kann dieser während des Normalbetriebs als Generator genutzt werden, um die Steuerelektronik mit Energie zu versorgen und die Akkus wieder aufzuladen.

### Ändern des Flügelraddurchmessers und der Flügelanstellwinkel

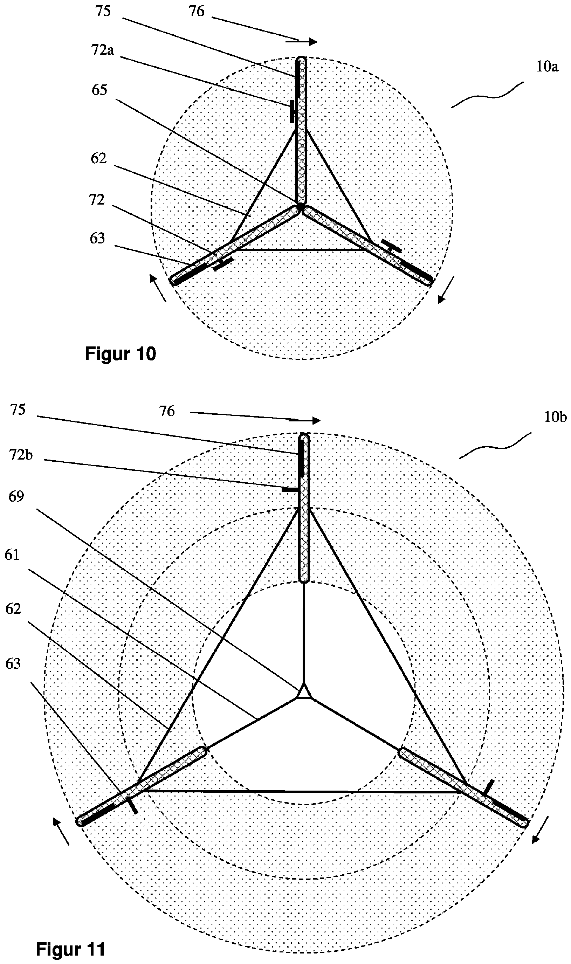

Die Figuren 10 bis 16 stellen eine weitere Ausgestaltungsform eines Flügelrades dar.

Bei dem in Figur 10 und 11 dargestellten Flügelrad 10 ist abhängig von der Betriebsart der Durchmesser des Flügelrads veränderbar.

In Figur 10 wird ein Flügelrad gezeigt, wie dieses während Start und Landung gewählt wird.

Durch den minimierten Durchmesser kann die Start- und Landevorrichtung in seiner räumlichen Dimension klein ausgestaltet werden. Direkt nach dem Start wird, wie in Figur 11 gezeigt, der Flügelraddurchmesser vergrößert. Die jeweiligen Einzelflügel 63 erfahren durch die Rotation des Flügelrads eine Fliehkraft, und werden von Seilen 61 gehalten. Weitere seile 62 sorgen für ein Beibehalten der dreieckförmigen Flügelpositionierung.

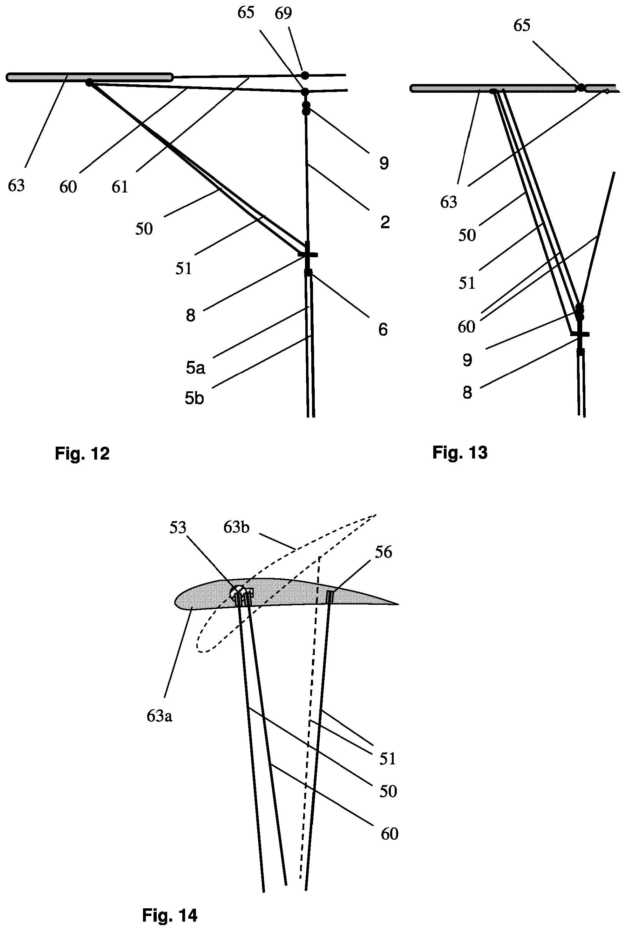

In den Figuren 12 und 13 wird in einer seitlichen Darstellung gezeigt, wie die Flügel 63 von schräg zur gemeinsamen Mitte führenden Halteseilen 50, 51 gehalten werden.

Figur 14 zeigt dabei, wie das Seil 50 die Hauptzugkraft übernimmt. Mit Hilfe eines zweiten Flügelsteuerseils 51 kann der Anstellwinkel rotationsabhängig verstellt werden.

Unabhängig von der rotationsabhängigen Anstellwinkelverstellung kann das Flügelsteuerseil 51 noch durch eine Vorrichtung im Flügel verlängert oder gekürzt werden. Damit lässt sich der Flügelanstellwinkel, wie in Figur 14 gezeigt, während Start und Landung oder dem schnellen Sinkflug 63b anpassen.

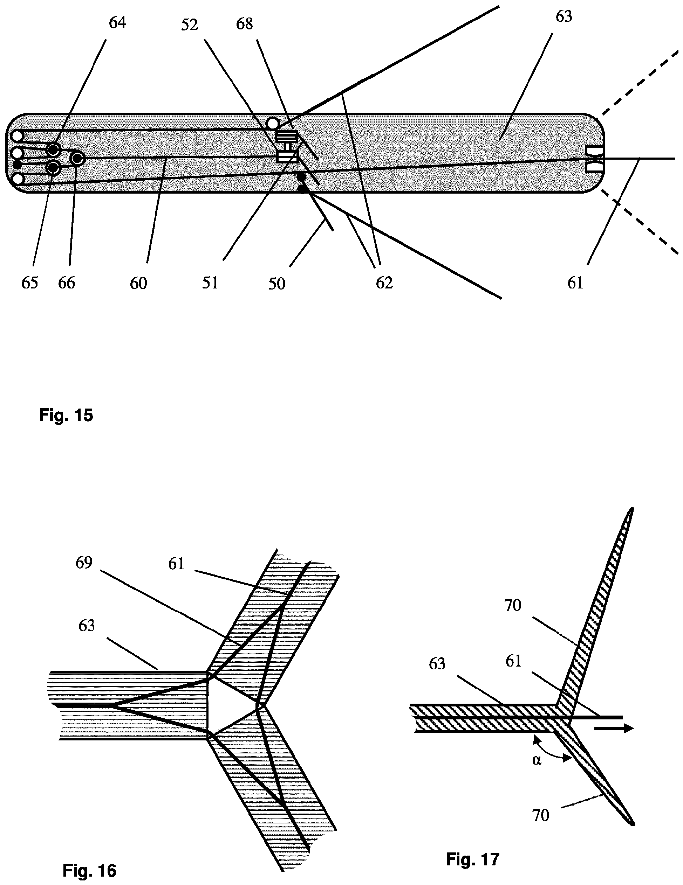

In Figur 15 wird diese Funktion weiter verdeutlicht. Abhängig vom Einzugstatus des Steuerseils 60 wird mittels eines Untersetzungsgetriebes 68 (ca. 20:1) das Flügelsteuerseil 51 in den Flügel eingezogen oder ausgegeben. Hierzu wird das Steuerseil 60 über eine Umlenkrolle 52 geführt. Die Drehbewegung dieser Umlenkrolle steuert ein Untersetzungsgetriebe 68 an.

### Anpassen des Flügelanstellwinkels

In Figur 16 wird dargestellt, wie abhängig vom jeweiligen Flügelraddurchmesser der Flügelanstellwinkel verändert werden kann. Zu sehen ist hierbei, wie im normalen Betrieb (maximaler Flügelraddurchmesser) ein leichter Anstellwinkel 84 anliegt. Mit Verringern des Flügelraddurchmessers kann bei Erreichen der maximalen Flughöhe der Anstellwinkel vergrößert werden 83, 63b. Damit geht das Flügelrad in einen schnellen Sinkflug über.

Nach Erreichen der gewünschten niedrigen Höhe wird das Flügelrad wieder voll entfaltet, wobei der Anstellwinkel wieder flacher 84 ist.

Während der Landung wird kurz vor dem Aufsetzen des Flügelrads auf der Landevorrichtung der Flügelraddurchmesser minimiert, so dass kein Anstellwinkel anliegt 81 oder gar kurzzeitig ein negativer Anstellwinkel anliegt 82. Damit kann ein sanftes Aufsetzen des Flügelrads erreicht werden.

Direkt mit Aufsetzten werden die drei Flügel bis auf Berührung zusammengezogen. Durch das Andoggen der Innenstirnflächen kann wieder ein positiver Anstellwinkel 80 geschaffen werden.

### Stabilisierung des Flügelrads

In Figur 15 wird in einer Draufsicht gezeigt, wie die Anpassung des Flügelraddurchmessers mit Hilfe des Steuerseils 60 erfolgt. Dabei werden, wie in Figur 12 dargestellt, die Steuerseile aller drei Flügel in der Rotationsmitte zusammengeführt. Ein Seilwirbel gleicht die Drehbewegung aus und mündet im gemeinsamen Steuerseil 2. Dieses wiederum ist mit einem der beiden Zugseile 5a,b verbunden. Damit ist es möglich, abhängig von der relativen Längenänderung der beiden Zugseile 5a und 5b ein Steuern des Flügelrads zu ermöglichen.

Das Steuerseil 60 ist im Innern des Flügels verbunden mit einer Umlenkrolle 66. Über diese Umlenkrolle läuft ein Seil, welches wiederum an zwei Umlenkrollen 64, 65 fixiert ist. Die Umlenkrolle 64 ist wiederum Teil eines Flaschenzugs mit einem Übersetzungsverhältnis von 3:1. Der Flaschenzug dient dem Einholen des Flügelhalteseils 62. Die Umlenkrolle 65 ist ebenfalls Teil eines Flaschenzugs mit einem Übersetzungsverhältnis von 2:1. Dieser Flaschenzug dient dem Einholen des Flügelhalteseils 61. Die Umlenkrolle 66 dient dem Längenausgleich der beiden Flaschenzüge, da die schräg verlaufenden Flügelhalteseile 62 durch ihre Schrägverspannung eine größere Seillänge zum Einholen besitzen als das Flügelhalteseil 61.

### Anstellwinkel bei sich berührenden Flügeln

In Figur 16 wird in einer Draufsicht gezeigt, wie die drei Flügel eines Flügelrades sich berühren. Die Flügelhalteseile 61 ziehen die Flügel zusammen. Dabei ist der Anstellwinkel der Flügel wie in Figur 17 gezeigt sehr flach. Dies ist gewollt, da das Flügelrad im Landeanflug eine geringe Sinkgeschwindigkeit aufweisen soll.

Andererseits sollen beim Start die Flügel sich ebenfalls berühren, damit das Flügelrad eine formstabile Einheit bildet. Gleichzeitig soll das Flügelrad eine schnelle Rotationszunahme aufweisen und benötigt hierzu einen steileren Anstellwinkel. Diese Eigenschaft kann erreicht werden, indem durch das berühren der Flügelinnenkanten wie in Figur 16 gezeigt, ein von der Flügelkontur abhängiger Anstellwinkel erzeugt wird. Die dreieckige Form der Flügelhalteseile im Drehmittelpunkt sorgen dafür, dass beide Flügelkanten sich aufeinander zu bewegen und sich schließlich berühren.

### Winglets am inneren Flügelende

In Figur 17 wird das innere Ende eines einzelnen Flügels gezeigt, an welchem zwei Winglets dargestellt sind. Die Winglets erfüllen wie bekannt die Aufgabe eines optimalen Auftriebs im Bereich der Flügelenden. Gleichzeitig jedoch dienen Sie der mechanischen Stabilisierung des Flügelrads in der Start- und Landephase. In dieser Phase ist es von Bedeutung, dass das Flügelrad in jeder Hinsicht formstabil ist. Da die Flügelzugseile 50, 51 in Flügelmitte befestigt sind, und der Ort der Befestigung für den ausgebreiteten Zustand des Flügelrads optimiert ist, kann es zu höhenbezogener Unstabilität des Flügelrads im Ruhezustand bzw. während der Start- und Landephase kommen.

Erreicht wird diese Formstabile Flügelradanordnung, indem das Flügelhalteseil die drei Einzelflügel gegeneinander auf Anschlag zieht. Die Winglets sind in Form und Winkel α bezogen auf den Flügel so beschaffen, dass die jeweiligen Außenkanten und/oder Enden der beiden Winglets die jeweiligen Winglets der benachbarten Flügels berühren.

Dadurch stützen die Winglets der einzelnen Flügel sich gegeneinander ab und stabilisieren so die drei Flügel des Flügelrads. Die 3 Flügel können somit nicht mehr nach unten oder oben kippen.

### Propeller mit Motor im Flügelrumpf integriert

Eine Möglichkeit zum Starten der Flügelräder bis in eine Höhe, in der genügend Wind für einen wirtschaftlichen Betrieb der Anlage möglich ist besteht darin, im jeweiligen Flügel einen Antrieb unterzubringen. Ein aus einem Akku gespeister Elektromotor treibt einen Propeller 72 an. Im Falle extremer Windverhältnisse oder einer Störung können Querruder hier auch Nummer und Propeller in Sekundenschnelle aktiviert werden und das Flügelrad wieder stabilisieren.

### Start- und Landung

Während des Starts der Anlage kann der Antrieb des Motors aus einem Akku oder durch die externe Stromversorgung erfolgen, wobei über ein Kabel 154 Strom von der Bodenstation 150 zugeführt wird.

Die Stromzufuhr erfolgt durch Andocken der Stromeinspeisestäbe 151 und 152. Der rotierende Flügelradhalter 120 senkt sich langsam durch das Einziehen der Zugseile 5. Wenn die Umlenkrolle 6 in Nähe der Seiltrommeln 1 kommt, schwenken die beiden Fixierarme 150 hoch und halten das Verbindungsrohr 129. Durch weiteres Absinken des Flügelradhalters 120 kreuzen sich die Wege der beiden Stromabnehmer 127, 128 mit den Stromeinspeisestäben 151, 152. Damit wird eine elektrische Verbindung von der Bodenstation über die Verbinungsleitung 154, die Stromeinspeisestäbe 151-152, die Stromabnehmer 127-128, den Stromverbindungsleitungen 130, den elektrisch leitenden Flügelzugseilen 50-51 bis hin zu den Akkus in den jeweiligen Flügeln 63 geschaffen.

Unmittelbar vor der Landung und auch während des Startens kann damit die Energieversorgung der Propeller aus der Bodenstation erfolgen. Gleichzeitig können damit die Akkus während des Aufenthalts am Boden aufgeladen werden.

Da die Stromabnehmer 127-128 sich mit den beiden Stromeinspeisestäben 151-152 berühren wird die Rotation der Lamellenkupplungsausgangsseite gestoppt. Durch weitergehendes Einziehen der Zugseile 5 werden die beiden Kontaktstäbe 153 gegen die Unterseite der Lamellenkupplung gedrückt und stellen damit einen Kraftschluss der Lamellenkupplung her. Dadurch wird die Rotation der Seiltrommel 124 ebenfalls gestoppt, wodurch die Flügelzugseile 50-51 auf der Seiltrommel 124 aufgewickelt werden. Da jedes der stromleitenden Flügelzugseile 50-51 in einem elektrisch isolierten Seiltrommelfach 125 aufgewickelt wird, lässt sich verhindern, dass sich die Flügelzugseile 50-51 berühren und einen Kurzschluss verursachen.

Zwischen dem drehfesten Verbindungsrohr 129 und der Seiltrommel 124 befindet sich ein kleiner Generator 131. Dieser versorgt die Flügel mit Strom, so dass z.B. während der Nachtstunden Positionslichter betrieben werden können.

Auch ist damit möglich per Funkverbindung Daten bidirektional mit der Bodenstation auszutauschen und die Akkus für die Versorgung des Propellermotors sowie der Querruderansteuerung nachzuladen.

Die Propeller und Querruder können aktiviert werden bevor das Flügelrad auf der Landevorrichtung aufsetzt. Damit wird ermöglicht, dass unmittelbar vor der Landung mit Hilfe von Querrudern der einzelnen Flügel die horizontale Position gehalten wird, so dass das Flügelrad trotz eventuell starker Seitenwinde stabilisiert werden kann.

Erst unmittelbar vor der Landung wird ein ringförmiger Schlauch 100 aufgepumpt. Damit wird eine weiche Oberfläche geschaffen für ein sanftes Aufsetzen des Flügelrads. Gleichzeitig können damit im Winter Schnee und Eis (durch Abplatzen) beseitigt werden.

### Positionierung des/der Windräder

Mit Hilfe von Positionierseilen 4 kann die Lage eines oder mehrerer zusammenhängender Flügelräder stabilisiert werden. Durch Änderung der relativen Seillänge der Positionierseile bezogen auf die Zugseile 5 kann die Position des Flügelrads verändert werden. Das Positionierseil erzeugt über einen Steuerhebel 185 ein Drehmoment am Flügelradhalter 120. Damit kann mittels der Positionierseile 4 mit kleinen Kräften ein Drehmoment erzeugt werden, welches über die zyklische Einzelblattverstellung zur einer Positionskorrektur des Flügelrads führt.

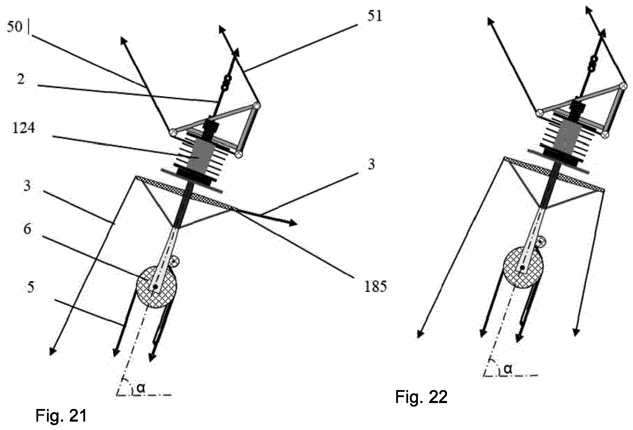

In Figur 21 wird ein Flügelrad gezeigt, welches innerhalb einer Gruppe von Flügelrädern über Querverbindungsseile 3 mit weiteren Flügelrädern verbunden ist. Durch Längenänderung der beiden Zugseile 5 entsteht eine Winkeländerung zwischen Querverbindungsseil 3 und den Steuerhebeln 185. Die Winkeländerung des Querverbindungsseils 3 führt zu einem Drehmoment in beiden Flügelrädern, so dass diese eine Seitwärtsbewegung ausführen.

In Figur 21 wird ein Flügelrad am Rande einer Flügelradgruppe dargestellt. Am linken Steuerhebel 185 ist anstelle eines Querverbindungsseils ein Positionierseil 4 angebracht. Durch relatives Verkürzen der Länge des Positionierseils 4 bewegt sich die gesamte Flügelradgruppe in Richtung des Positionierseils 4.

Die Befestigung des Positionierseils 4 über einen Steuerhebel 185 ermöglicht am Boden einen geringeren Abstand der Seilwinde des Positionierseils von den Seilwinden der Zugseile.

In Figur 22 kann ein einzelnes Flügelrad mit Hilfe von wenigstens 3 Positionierseilen 4 gesteuert werden.

### Bezugszeichenliste

- 1: Horizontal drehfest platzierte Seilwinde mit Motor/Generator
- 2: Steuerseil zur Steuerung für Flügelraddurchmesser und Anstellwinkel
- 3: Verbindungsseil
- 4: Positionierseil
- 5a: Zugseil 1
- 5b: Zugseil 2
- 6: Seilumlenkrolle für Zugseile
- 8: Drehlager zur Flügelradsteuerung und Fixierung
- 9: Seilwirbel
- 10a: Flügelrad bestehend aus z.B. drei Einzelflügeln
- 10b: Flügelrad auf maximalen Durchmesser entfaltet
- 11: Windrichtung
- 12: Seilwinde mit Motor/Generator
- 16: Seilumlenkrolle windrichtungsabhängig horizontal drehbar

- 20: Starthilfeeinheit mit zwei gegenphasig rotierenden Propellern
- 21: Flügelradeinheit mit Seitenflosse
- 22: Seilführungsrohr
- 23: Elektromotor/Generator mit Akkuversorgung
- 24: Propeller unten für Starthilfe (z.B. rechtsdrehend)
- 25: Propeller oben für Starthilfe (z.B. linksdrehend)
- 26: Antriebswelle mit stirnseitiger Sägeverzahnung
- 27: Halter für Flügelrad wird in Flügelradhalter eingesteckt
- 28: Halter für Flügelrad am Haltemast
- 29: Haltemast mit Abspannseilen
- 30: Start- und Landeeinheit mit Seilwinde
- 31: Kugellager für drehbare Seilumlenkrolle
- 32: Hülse, von zwei Kugellagern drehbar gehalten
- 33: Seilführungsbügel
- 34: Freilauf zur Abkopplung des Propellers vom Motor im Normalbetrieb
- 35: Freilauf zur Abkopplung der Seitenflosse während der Startphase

- 50: Flügelzugseil
- 51: Flügelsteuerseil zur rotationsabhängigen Anstellwinkelverstellung
- 52: Umlenkrolle für Steuerseil 60
- 53: Taumelscheibe zur Ansteuerung des Flügelanstellwinkels
- 54: Ansteuerung Einzelblattverstellung mittels Taumelscheibe
- 55: Seitenflosse

- 60: Steuerseil für einzelnen Flügel
- 61: Flügelhalteseil zur Flügelfixierung aufgrund der Fliehkraft
- 62: Flügelhalteseil zur Fixierung der drei Flügel eines Flügelrades
- 63a: Einzelner Flügel mit Anstellwinkel während des Fierens
- 63b: Einzelner Flügel mit Anstellwinkel während der Einholphase (schneller Sinkflug)
- 64: Seilflaschenzug 3:1
- 65: Seilflaschenzug 2:1
- 66: Umlenkrolle zum Längenausgleich für gemeinsames Steuerseil (60)
- 67: Umlenkrolle und Antriebsrad für Untersetzungsgetriebe
- 68: Untersetzungsgetriebe ca. 20:1
- 69: Drehmittelpunkt eines Flügelrades
- 70: Winglet nach oben gerichtet
- 71: Winglet nach unten gerichtet
- 72a: Klapppropeller mit Motor im Betrieb z.B. während Startphase
- 72b: Propeller mit Motor in Ruhestellung mit nach hinten geklappten Klapppropellern
- 73: Propeller rotierend bestehend aus 4 Blättern
- 74: Verschlussklappen zum Verschließen der Propelleröffnungen im Flügelrumpf
- 75: Querruder
- 76: Drehrichtung des Flügelrades

- 81: Kein Anstellwinkel während Landephase unmittelbar vor dem Aufsetzen
- 82: Negativer Anstellwinkel (alternativ) während Landephase vor dem Aufsetzen
- 83: Steiler Anstellwinkel während schnellem Sinkflug
- 84: Flacher Anstellwinkel während des Fierens

- 90: Taumelscheibe fixer Teil
- 91: Taumelscheibe drehender Teil
- 92: Steuerstange für zyklische Blattverstellung
- 93: Drehlager zur Ansteuerung der Taumelscheibe
- 94: Gestänge zur Höhenverstellung der Drehlager 93
- 95: Fixierstange zur rotatorischen Fixierung der Taumelscheibe
- 96: Antriebswelle zur Ansteuerung (Fixierung) des Generators
- 97: Hilfssteuerseil zur Ansteuerung des Untersetzungsgetriebes
- 98: Verbindung von Drehlager 93 mit Taumelscheibe 90

- n0: Drehfest bezüglich Seitenflosse
- n1: Mit dem Flügelrad drehend

- 100: Aublasbarer Ringschlauch (in Bild luftleer) für weiches Aufsetzen des Flügelrads
- 101: Eventuelle federnde Elemente zur weiteren Federung
- 102: Unterbau mit Steuerkomponenten für Start- Landevorrichtung z.B. Fertigbetonelement

- 120: Flügelradhalter mit Ansteuerung eines rotationsabhängigen Einzelblattanstellwinkels
- 122: Umlenkrolle
- 123: Drehbarer Umlenkrollenhalter
- 124: Seiltrommel mit 6 geteilten Seilaufwickelfächern
- 125: Einzelnes Seilaufwickelfach
- 126: Lamellenrutschkupplung
- 127: Stromabnehmer 1
- 128: Stromabnehmer 2
- 129: Verbindungsrohr rotationszentrisch angeordnet
- 130: Stromverbindungsleitung von Stromabnehmer über die Lamellenrutschkupplung zu den elektrisch leitenden Flügelzugseilen 50, 51
- 131: Generator

- 150: Schwenkbare an Bodenstation platzierte Halterung zur Fixierung des Verbindungsrohrs (129) während der Landung
- 151: Stromeinspeisestab Pol 1
- 152: Stromeinspeisestab Pol 2
- 153: Kontaktstsb zum Anpressen und damit Steuern der Lamellenkupplung
- 154: Stromzuleitung von Bodenstation kommend
- 155: Schwenkbarer drehfester Haltearm
- 156: Schwenkrichtung

- 180: Querruder
- 181: Propeller aktiv
- 182: Propeller deaktiviert
- 185: Steuerhebel

## Patentansprüche

1. Vorrichtung für ein Flügelrad (10) zur Stromerzeugung mittels Windkraft, wobei ein Windrad zur Stromerzeugung mittels Höhenwind vorhanden ist und das Flügelrad (10) dabei von einem einzelnen Flügelzugseil (50) gehalten ist, wobei dieses Windrad den weit energiereicheren Höhenwind in einer Höhe von 200 bis 500 m über Grund zur Energieerzeugung nutzt, wobei das Flügelzugseil (50) vorhanden ist, wobei der von unten gegen das Flügelrad (10) anströmende Wind das Flügelrad (10) in eine Drehbewegung versetzt, wodurch die Zugkraft erhöht ist, wobei der Flügelraddurchmesser und der Flügelanstellwinkel änderbar sind, wobei das Flügelrad (10) abhängig von der Betriebsart, der Durchmesser des Flügelrads (10) veränderbar ist, wobei der Flügelraddurchmesser vergrößerbar ist, wobei jeweilige Einzelflügel (63) von Steuerseilen (60, 61) gehalten ist, wobei die Einzelflügel (63) von schräg zur gemeinsamen Mitte führenden Halteseilen gehalten sind, wobei ein Flugzugseil (50) die Hauptzugkraft übernimmt , **dadurch gekennzeichnet, dass** und durch ein zweites Flügelsteuerseil (51) der Anstellwinkel rotationsabhängig verstellbar ist, wobei abhängig vom Einzugstatus eines der Steuerseile (60, 61) mittels eines Untersetzungsgetriebes (68) von 20:1 das Flügelsteuerseil (51) in den Flügel einziehbar oder ausgebbar ist, wobei das Steuerseil (60, 61) über eine Umlenkrolle (52) führbar ist, wobei die Drehbewegung dieser Umlenkrolle (52) das Untersetzungsgetriebe (68) ansteuert.

## Claims

1. Device for an impeller (10) for power generation by means of wind power, wherein a wind wheel for power generation by means of high-altitude wind is present and the impeller (10) is thereby supported by a single blade pull rope (50), wherein said wind wheel utilizes the far more energetic high-altitude wind at a height of 200 to 500 m above ground for power generation, wherein the blade pull rope (50) is provided, wherein the wind flowing against the impeller (10) from below causes the impeller (10) to rotate, thereby increasing the pulling force,
wherein the impeller diameter and the angle of attack of the blade are changeable, wherein the diameter of the impeller (10) is changeable depending on the mode of operation, wherein the impeller diameter can be increased, wherein respective individual blades (63) are held by control ropes (60, 61), wherein the individual blades (63) are held by holding ropes leading obliquely to the common center, wherein a flight traction rope (50) takes over the main traction force,
**characterized in that**
the angle of attack can be adjusted in a rotation-dependent manner by means of a second blade control rope (51), wherein, depending on the retraction status of one of the control ropes (60, 61), the blade control rope (51) can be retracted or extended into the blade by means of a reduction gear (68) of 20:1, wherein the control rope (60, 61) can be guided over a deflection pulley (52), the rotary movement of this deflection pulley (52) driving the reduction gear (68).

## Revendications

1. Dispositif pour roue à ailettes (10) permettant de générer de l'électricité au moyen d'énergie éolienne, dans lequel une roue éolienne permettant de générer de l'électricité au moyen de vent de haute altitude est fournie et la roue à ailettes (10) est ainsi maintenue par un seul câble de traction d'ailettes (50), ladite roue éolienne utilisant le vent de haute altitude à énergie beaucoup plus élevée à une hauteur de 200 m jusqu'à 500 m au-dessus du sol pour générer de l'énergie, le câble de traction d'ailettes (50) étant fourni, le vent soufflant contre la roue à ailettes (10) par le bas amenant un mouvement de rotation de la roue à ailettes (10), moyennant quoi la force de traction est augmentée, le diamètre de roue à ailettes et l'angle d'inclinaison d'ailettes pouvant être modifiés, la roue à ailettes (10) pouvant varier en fonction du mode de fonctionnement du diamètre de la roue à ailettes (10), le diamètre de roue à ailettes pouvant augmenter, des ailettes individuelles (63) respectives étant maintenues par des câbles de commande (60, 61), les ailettes individuelles (63) étant maintenues par des câbles de retenue menant obliquement vers un centre commun, un câble de traction d'ailettes (50) prenant le rôle de force de traction principale, **caractérisé en ce que** l'angle d'attaque peut être ajusté en fonction de la rotation par un second câble de commande d'ailettes (51), le câble de commande d'ailettes (51) pouvant être rétracté ou déployé de l'ailette au moyen d'un démultiplicateur (68) de 20:1 en fonction de l'état d'insertion de l'un des câbles de commande (60, 61), le câble de commande (60, 61) pouvant être guidé sur un galet de renvoi (52), le mouvement de rotation dudit galet de renvoi (52) commandant le démultiplicateur (68).
